# EUROPEAN PATENT APPLICATION

(11) **EP 4 838 573 A1**
(43) Date of publication of application: **11.11.2026**
(21) Application number: 25179771.8
(22) Date of filing: 30.05.2025
(51) Int. Cl.: H01M 4/1393, H01M 4/04, H01M 4/62, H01M 4/587, H01M 4/133, H01M 10/0525

(54) **SECONDARY BATTERY, METHOD FOR PREPARING THE SAME, ENERGY STORAGE SYSTEM, AND ELECTRIC DEVICE**

(30) Priority: 08.05.2025 CN 202510594156
(71) Applicant: Zhejiang Jinko Energy Storage Co., Ltd., Jiaxing, Zhejiang (CN)
(72) Inventor: XIAO, Feng, Haining, Zhejiang (CN); YANG, Zixiang, Haining, Zhejiang (CN); ZHU, Mingwei, Haining, Zhejiang (CN); LU, Mengting, Haining, Zhejiang (CN); ZHANG, Luhua, Haining, Zhejiang (CN)
(74) Representative: Balder IP Law, S.L.

(57) **Abstract**

A secondary battery, a method for preparing the same, an energy storage system, and an electrical device are provided, relating to the field of energy storage. The method includes: adding first, second and third azeotropic additives to an initial slurry and mixing them to form a negative slurry; and coating the negative slurry coated onto a surface of a negative current collector and performing a drying treatment at a temperature lower than 100°C. The first, second, and third azeotropic additives form an azeotropic mixture with water molecules, with an azeotrope boiling point of less than 100°C. The boiling point of the first azeotropic additive is in a range of 50°C to 65°C, the boiling point of the second azeotropic additive is in a range of 65°C to 85°C, and the boiling point of the third azeotropic additive is higher than that of the first azeotropic additive and lower than 100°C. Additionally, the third azeotropic additive forms hydrogen bonds with water molecules. The negative plate obtained in this way has low moisture residue.

## Description

### TECHNICAL FIELD

Various embodiments described in this document relate to the field of energy storage, and in particular, to a secondary battery, a method for preparing the secondary battery, an energy storage system, and an electrical device.

### BACKGROUND

As one of core components of a lithium-ion battery, the negative plate has its structural design, material selection, and preparation process directly determining the overall performance of the battery. During the manufacturing process of the negative plate, the coating process, as a critical step, has a decisive impact on battery performance.

The coating process refers to the procedure of evenly applying a slurry of negative active materials onto aluminum foil or a copper foil current collectors, followed by drying to form a porous coating structure. Quality control parameters of this process, including coating thickness uniformity, surface density distribution consistency, surface defect control, and residual moisture content after drying, significantly affect key battery metrics such as consistency, cycle life, energy density, and safety performance.

Therefore, there is an urgent need for a method for preparing a secondary battery to solve the problem of high residual moisture content in the negative plate, so as to meet the complex demands in the field of the energy storage.

### SUMMARY

The embodiments of the present invention provide a secondary battery, a method for preparing the secondary battery, an energy storage system, and an electric device. The present invention is set out in the appended set of claims.

A first aspect of the embodiments of the present invention provides a method for preparing a secondary battery. The method includes: preparing a negative plate, providing a positive plate and a separator, winding or stacking the positive plate, the separator, and the negative plate, placing them into a housing, and injecting an electrolyte into the housing to form the secondary battery. The negative plate is prepared by: preparing an initial slurry including a negative active material, adding a first azeotropic additive, a second azeotropic additive and a third azeotropic additive to the initial slurry and mixing all of them to obtain a negative slurry, coating the negative slurry onto a surface of a negative current collector, and performing a drying treatment at a temperature lower than 100°C to obtain the negative plate. The first, second and third azeotropic additives together with water molecules in the negative slurry form an azeotropic mixture having an azeotropic point lower than 100°C. The first azeotropic additive has a boiling point ranging from 50°C to 65°C, the second azeotropic additive has a boiling point ranging from 65°C to 85°C, the third azeotropic additive has a boiling point higher than that of the first azeotropic additive and lower than 100°C, and the third azeotropic additive forms hydrogen bonds with the water molecules.

A second aspect of the embodiments of the present invention provides a secondary battery, which is preparable by the method provided in any of the above embodiments. The secondary battery includes: a negative plate including a negative current collector and a negative active material layer, a housing, a positive plate, and a separator. The negative active material layer is disposed on at least one surface of the negative current collector, and the negative active material layer is obtained by drying the negative slurry, moisture content of the negative plate being less than 922 ppm. The positive plate, the separator, and the negative plate are wound or stacked and placed into the housing into which an electrolyte is injected.

A third aspect of the embodiments of the present invention provides an energy storage system, including the secondary battery provided in any of the above embodiments.

A fourth aspect of the embodiments of the present invention provides an electrical device, including the secondary battery provided in any of the above embodiments and a load, and the secondary battery is configured to supply power to the load.

### BRIEF DESCRIPTION OF THE DRAWINGS

One or more embodiments are illustrated with reference to the figures in the corresponding drawings. These illustrations are not intended to limit the embodiments. The figures in the drawings are not intended to impose any proportional restrictions unless explicitly stated otherwise. In order to more clearly illustrate the technical solutions of the embodiments of the present invention or conventional art, the following provides a brief introduction to the figures used in the embodiments. It is evident that the figures described below show merely some of the embodiments of the present invention, and those skilled in the art may, without inventive effort, derive other figures from these drawings.
FIG. 1 is a schematic structural diagram of a negative plate;
FIG. 2 is a flowchart of a method for preparing a secondary battery according to the embodiments of the present invention;
FIG. 3 is a schematic structural diagram of a negative plate according to the embodiments of the present invention;
FIG. 4 is a schematic structural diagram of another negative plate according to the embodiments of the present invention; and
FIG. 5 is a top view of a negative plate according to the embodiments of the present invention.

### Reference signs in the drawings:

| | | | |
|---|---|---|---|
| 1 | negative substrate; | 2 | negative active layer; |
| 11 | negative current collector; | 12 | negative active material layer. |

### DETAILED DESCRIPTION OF THE EMBODIMENTS

As can be seen from the BACKGROUND section, there is an urgent need for a method for preparing a secondary battery to solve the problem of high moisture residue in the negative plate, in order to meet the complex demands in the energy storage field.

Taking the negative plate as an example, the manufacturing steps of the negative plate include coating and drying processes. Due to the challenges in controlling drying process parameters, particularly since the oven temperature is usually controlled to be below the boiling point (100°C) of water, this leads to the problem of excessive moisture residue in the coated negative plate. This moisture residue causes multiple negative effects. First, weight loss test results of the negative plate are higher than expected, indicating that the moisture content exceeds the standard. Second, the residual moisture causes additional energy loss during the battery charge and discharge process. More importantly, water molecules may chemically react with the lithium salt (such as LiPF₆) in the electrolyte, producing highly corrosive hydrofluoric acid (HF). These side reactions not only damage the internal structure of the battery, accelerating capacity degradation, but also pose serious safety risks such as battery swelling and leakage, ultimately affecting the overall performance and reliability of the battery.

Additionally, although the moisture content in the negative plate can be reduced by adjusting the oven parameters, such as increasing the oven temperature, increasing the air frequency, and extending the drying time, this may lead to cracks in the negative plate during the coating process. Furthermore, the increased energy consumption in the coating process can negatively impact the efficiency of negative plate manufacturing, affecting the control of time and economic costs in the battery manufacturing process. Moreover, the cracks in the negative plate can adversely affect the safety performance and cycle life of the battery.

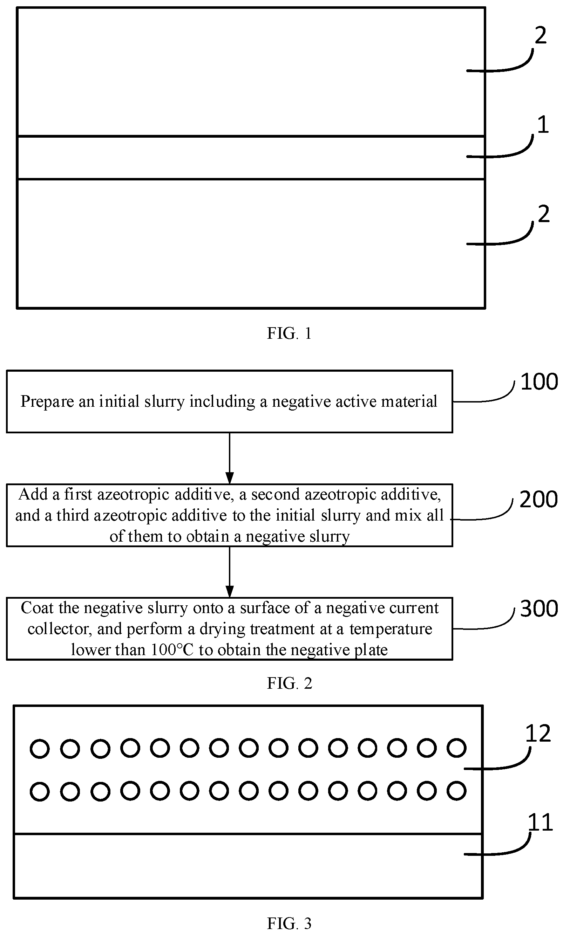

FIG. 1 is a schematic structural diagram of a negative plate.

Referring to FIG. 1, the negative plate includes a negative substrate 1 and a negative active layer 2 stacked, where the negative active layer 2 is disposed on at least one surface of the negative substrate 1. After coating the negative slurry onto the negative substrate 1, a drying treatment is performed in an oven to form the negative active layer 2 on the surface of the negative substrate 1. The drying treatment in the oven primarily relies on three modes of heat transfer, i.e., thermal conduction, thermal convection, and thermal radiation to achieve the drying effect. These three modes of heat transfer work synergistically to efficiently promote the evaporation of moisture within the negative active layer 2, thereby achieving the desired drying effect. However, since the main liquid component in the negative slurry is water with a boiling point of 100°C, the drying conditions in the oven often fail to sufficiently and effectively reduce the residual moisture content in the negative active layer 2.

It has been found in practice that during the drying process, additives in the negative slurry have boiling points slightly lower than that (100°C) of water and therefore can evaporate more quickly in the oven and carry away moisture in the process. Furthermore, due to their relatively high vapor pressures, these additives evaporate rapidly, thereby meeting the requirements for fast drying. These additives are generally miscible with water, meaning that they can mix well with water. During evaporation, the additive molecules can interact with water molecules to reduce the surface tension of water, making it easier for the water molecules to escape from the surface of the negative slurry, thus accelerating moisture evaporation.

A method for preparing a secondary battery is provided according to an embodiment of the present invention. In the step of preparing the negative slurry, a first azeotropic additive, a second azeotropic additive, and a third azeotropic additive are added to an initial slurry and mixed with the initial slurry. The first, second and third azeotropic additives together with water form azeotropic mixture, having an azeotropic point lower than 100°C. The first azeotropic additive has a boiling point in the range of 50°C to 65°C. The second azeotropic additive has a boiling point in the range of 65°C to 85°C. The third azeotropic additive has a boiling point higher than that of the first azeotropic additive and lower than 100°C. The negative slurry in this embodiment includes multiple azeotropic additives, which facilitate accelerated evaporation of moisture during the drying process, thereby reducing the residual moisture content in the negative plate.

In the description of the embodiments of the present invention, technical terms such as "first" and "second" are merely used to distinguish between different elements, and should not be construed as indicating or implying relative importance, quantity, specific order, or any priority relationship of the indicated technical features.

The following provides a detailed description of various embodiments of the present invention. However, it should be understood by those of ordinary skill in the art that numerous technical details are included herein solely for the purpose of better understanding the present invention. Even in the absence of these technical details, and with various modifications and adaptations based on the embodiments described below, the technical solutions sought to be protected by the present invention may still be implemented.

FIG. 2 is a flowchart of a method for preparing a secondary battery according to the embodiments of the present invention.

In a first aspect, a method for preparing a secondary battery is provided according to an embodiment of the present invention. The method includes preparing a negative plate.

Referring to FIG. 2, the preparation of the negative plate includes the following steps 100 to 300.

In step 100, an initial slurry including a negative active material is prepared.

In step 200, a first azeotropic additive, a second azeotropic additive, and a third azeotropic additive are added to the initial slurry and mixed with the initial slurry to obtain a negative slurry.

The first azeotropic additive, the second azeotropic additive, and the third azeotropic additive together with water molecules in the negative slurry form azeotropic mixtures with an azeotropic point lower than 100°C. The boiling point of the first azeotropic additive ranges from 50°C to 65°C, the boiling point of the second azeotropic additive ranges from 65°C to 85°C, and the boiling point of the third azeotropic additive is higher than that of the first azeotropic additive and lower than 100°C. Moreover, the third azeotropic additive forms hydrogen bonds with water molecules.

In step 300, the negative slurry is coated on a surface of a negative current collector and subjected to a drying process at a temperature lower than 100°C to obtain the negative plate.

The method for preparing the secondary battery further includes: providing a positive plate and a separator; winding or stacking the positive plate, the separator, and the negative plate, and placing them into a housing; injecting an electrolyte into the housing to form the secondary battery.

The negative slurry prepared in the embodiments of the present invention includes three functional components, i.e., a first azeotropic additive, a second azeotropic additive, and a third azeotropic additive. These additives together with water molecules can form an azeotropic mixture with the azeotropic point lower than 100°C. On the one hand, since the boiling points of the first, second and third azeotropic additives are all lower than that of water molecules, the vapor pressures of the first, second and third azeotropic additives are all higher than that of water molecules under the same temperature conditions. Therefore, the evaporation rates of the first, second and third azeotropic additives are faster than that of water molecules, which satisfies the need for rapid drying. The first, second and third azeotropic additives form azeotropic mixtures with water molecules, therefore the surface tension of water in the negative slurry can be reduced, making it easier for water molecules to escape from the surface of the negative slurry, thus facilitating water evaporation. On the other hand, the negative slurry prepared in the embodiments includes azeotropic additives with different boiling points. Through this multi-component synergistic system, gradient evaporation of azeotropic additives with different boiling points can be achieved during the drying process after coating, thereby forming a multi-level pore structure and significantly improving the evaporation efficiency of water in the negative plate. For example, gradient evaporation of the azeotropic mixture formed by the first and second azeotropic additives with increasing boiling points and water molecules occurs. The boiling point of the third azeotropic additive is higher than that of the first azeotropic additive. Additionally, the third azeotropic additive forms hydrogen bonds with water molecules. These hydrogen bonds help evenly distribute water in the negative slurry, thus preventing local aggregation of the slurry after the evaporation of the first azeotropic additive, and avoiding issues where water becomes difficult to remove due to local aggregation.

It should be understood that in the embodiments of the present invention, "azeotropic" refers to the fact that the additive can carry water molecules and evaporate together with water molecules. Therefore, there is an azeotropic relationship between the additive and the water molecules.

Specifically, the first azeotropic additive has the boiling point ranging from 50°C to 65°C, and quickly forms a low-boiling azeotrope with water during the initial drying stage, allowing the low-boiling azeotrope to evaporate quickly and carry away the water in the negative slurry. The second azeotropic additive has the boiling point ranging from 65°C to 85°C, and continues to co-evaporate with water in the intermediate stage, evaporating and carrying away water from the negative slurry, preventing interruptions in the drying process or sudden temperature rises that could lead to material stress issues in the subsequently formed negative plate. The boiling point of the third azeotropic additive is higher than that of the first azeotropic additive and lower than 100°C, and the third azeotropic additive forms hydrogen bonds with water molecules, disrupting the hydrogen bond network of water, lowering the evaporation enthalpy, and also helping to improve the dispersion evenness of water molecules to prevent local aggregation in the negative slurry, which aids in more thoroughly removing residual water, especially the trace amounts of water that are difficult to evaporate. Therefore, the embodiments of the present invention achieve an efficient, low-temperature, and even drying process through the synergistic effect of the multi-component azeotropic system, balancing material protection and production efficiency, while the disruption of the hydrogen bond network of water further optimizes the dehydration effect, which is beneficial for the preparation of high-performance secondary batteries.

In the embodiments of the present invention, the boiling point range of each additive (i.e., the first azeotropic additive, second azeotropic additive, and third azeotropic additive) is regulated to achieve controllable regulation of water migration and phase separation behavior. For example, the boiling point of the first azeotropic additive is regulated in the range of 50°C to 65°C, including but not limited to discrete values such as 50°C, 52°C, 55°C, 60°C, or 65°C, or any continuous range between these values. This low-temperature evaporating component can rapidly form micron-scale channels during the early drying stage. The boiling point of the second azeotropic additive is regulated in the range of 65°C to 85°C, including but not limited to discrete values such as 65°C, 70°C, 75°C, 80°C, or 85°C, or any continuous range between these values. This intermediate transition component can form submicron-scale transition channels. The boiling point of the third azeotropic additive is higher than that of the first azeotropic additive and lower than 100°C, and the third azeotropic additive can form hydrogen bonds with water molecules, effectively regulating the migration path of water molecules and the phase separation dynamics, which helps avoid the aggregation of water molecules in the slurry and improves water evaporation.

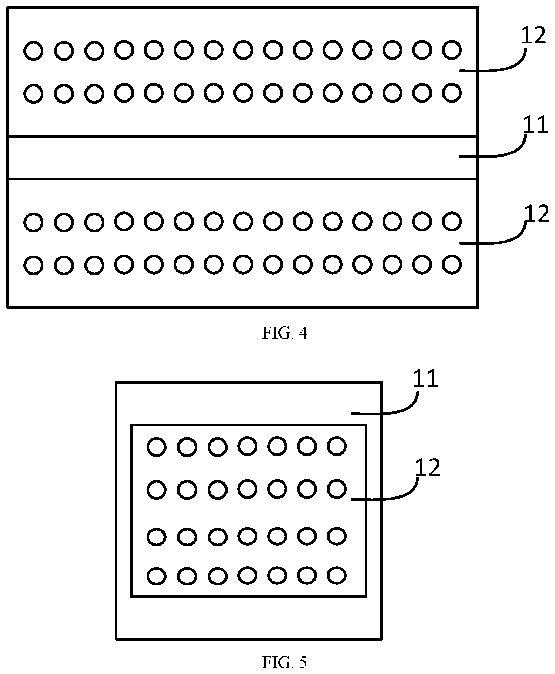

FIG. 3 is a schematic structural diagram of a negative plate according to the embodiments of the present invention. FIG. 4 is a schematic structural diagram of another negative plate according to the embodiments of the present invention. FIG. 5 is a top view of the negative plate according to the embodiments of the present invention.

As shown in FIG. 3, in some embodiments, the negative slurry is coated on one surface of the negative current collector 11, and then is subjected to a drying treatment to form the negative active material layer 12. As shown in FIG. 4, in other embodiments, the negative slurry is coated on both opposite surfaces of the negative current collector 11, and then is subjected to a drying treatment to form the negative active material layers 12. Additionally, as shown in FIG. 5, in some embodiments, the negative slurry may be coated only in the middle of the negative current collector 11 to form the negative active material layer 12. The embodiments of the present invention do not limit the coating area of the negative slurry. In other embodiments, the negative slurry may also be coated over the entire negative current collector 11.

In FIG. 3 to FIG. 5, the porous structure in the negative active material layer is illustrated by circles.

With reference to FIG. 3 to FIG. 5, during the drying process after coating, the multi-stage azeotropic additive system formed by the first, second and third azeotropic additives, through a gradient evaporation mechanism, can form a stable porous structure. This, in combination with surface tension control, optimizes the water migration path. As a result, efficient removal of water molecules and even stability of the negative plate after coating are achieved during the drying process. This not only significantly improves drying efficiency but also forms an optimized porous structure in the negative plate, which is beneficial for electrolyte infiltration, reduces internal resistance, and minimizes defects. Experiments have shown that this technical solution significantly reduces the water residue and internal resistance in the negative plate, improving the rate performance and cycle stability of the secondary battery.

In some embodiments, the boiling point of the third azeotropic additive may be higher than that of the second azeotropic additive. In this case, during the evaporation of water carried by the second azeotropic additive, the third azeotropic additive has not yet evaporated but forms hydrogen bonds with water molecules. This presence of the third azeotropic additive still helps to evenly disperse the water in the negative slurry, preventing localized aggregation, which in turn further enhances the water evaporation effect.

For example, the second azeotropic additive may include at least two additives, with their amounts properly set so that the boiling point of the second azeotropic additive is lower than that of the third azeotropic additive. Alternatively, the second azeotropic additive incudes a single additive, and the boiling point of this additive is lower than that of the third azeotropic additive.

It should be understood that, in some other embodiments, the boiling point of the third azeotropic additive is lower than that of the second azeotropic additive.

In some embodiments, at least one of the first, second and third azeotropic additives is a polar solvent.

Since at least one of the first, second and third azeotropic additive is a polar solvent, and water molecules are polar molecules, as well as polar molecules tend to dissolve in polar solvents. As a result, the polar solvent and water molecules can fully dissolve in each other, significantly improving the dispersion and stability of the negative slurry. This enhances the interaction between the first, second and third azeotropic additives and water molecules, thus more efficiently regulating the evaporation behavior during the drying process.

Specifically, the selection of the polar solvent may be based on its boiling point to match the corresponding azeotropic additive category. A low-boiling-point polar solvent with a boiling point in the range of 50°C to 65°C may be selected as the first azeotropic additive to promote rapid evaporation during the early drying stage, forming the initial pore structure, such as micron-sized pores. A high-boiling-point polar solvent with a boiling point in the range of 65°C to 85°C may be selected as the second azeotropic additive to maintain the evaporation gradient during the middle drying stage, optimizing the pore connectivity and further forming sub-micron-sized transition pores. A polar solvent with a boiling point lower than 100°C and higher than that of the first azeotropic additive may be selected as the third azeotropic additive, and this polar solvent can form hydrogen bonds with water molecules. The hydrogen bonding can delay the migration of water molecules, improve the even dispersion of water, prevent aggregation, reduce drying stress, and therefore prevent the negative plate from cracking.

For example, one of the first, second and third azeotropic additives may be a polar solvent. Alternatively, two of the first, second and third azeotropic additives may be polar solvents. Alternatively, all three of the first, second and third azeotropic additives may be polar solvents.

The initial slurry further includes a conductive agent and a binder. In the embodiments of the present invention, the first, second, or third azeotropic additive being a polar solvent can enhance the compatibility among the negative active material, the conductive agent, and the binder, thereby reducing agglomeration and improving the evenness and dispersibility of the negative slurry. The multi-level pore structure formed through gradient evaporation facilitates electrolyte infiltration, reduces the internal resistance of the negative plate, and minimizes defects. Moreover, the hydrogen bonding effect of the polar solvent can reduce drying stress and suppress curling or cracking of the negative plate.

In some embodiments, the negative active material is mixed with a conductive agent, a dispersant, a binder, and deionized water to form an initial slurry. In the embodiments of the present invention, the first, second, and third azeotropic additives can suppress the gelation of the negative slurry and regulate its rheological properties to inhibit agglomeration of the negative active material.

The embodiments of the present invention do not place specific limitations on the types of conductive agents, dispersants, or binders, which may be selected according to actual requirements. By way of example, the conductive agent may include at least one selected from graphite, super P carbon, acetylene black, carbon black, Ketjen black, carbon dots (carbon quantum dots, CQD), carbon nanotubes, graphene, and carbon nanofiber. The dispersant may include at least one selected from polyethylene glycol, hydroxypropyl methylcellulose, polyvinylpyrrolidone, sodium dodecyl sulfate, carboxymethyl starch, polyvinyl benzyl trimethylammonium salt, octylphenol ethoxylate, polystyrene sulfonate, polypropylene maleic acid, polyethyleneimine, N-methylpyrrolidone, carboxymethyl cellulose (CMC), and carboxymethyl cellulose (e.g., sodium carboxymethyl cellulose, Na-CMC). The binder may include at least one selected from styrene-butadiene rubber (SBR), polyvinylidene fluoride (PVDF), polytetrafluoroethylene (PTFE), polyvinyl butyral (PVB), water-based acrylic resin, and carboxymethyl cellulose.

In some embodiments, the boiling point of the first azeotropic additive is in the range of 50°C to 55°C, including but not limited to discrete values such as 50°C, 51°C, 52°C, 53°C, 54°C, or 55°C, or any continuous range between any two of the aforementioned values. This low-boiling component enables rapid evaporation during the initial stage of drying, facilitating the formation of micron-scale pores. The boiling point of the second azeotropic additive is in the range of 80°C to 85°C, including but not limited to discrete values such as 80°C, 81°C, 82°C, 83°C, 84°C, or 85°C, or any continuous range between any two of the aforementioned values. The evaporation dynamics and pore structure evolution during the drying process can be effectively optimized by precisely regulate the boiling point ranges of the first and second azeotropic additives.

In some embodiments, in the negative slurry, the total mass of the first azeotropic additive and the second azeotropic additive accounts for 0.2% to 0.5% of the mass of the negative active material. The mass ratio of the first azeotropic additive to the second azeotropic additive ranges from 1:3 to 1:7. The mass of the third azeotropic additive accounts for 0.1% to 0.3% of the mass of the negative active material.

The total mass of the first azeotropic additive and the second azeotropic additive accounts for 0.2% to 0.5% of the mass of the negative active material, including but not limited to discrete values such as 0.2%, 0.3%, 0.4%, or 0.5%, or any continuous range between any two of the aforementioned values. The mass ratio of the first azeotropic additive to the second azeotropic additive ranges from 1:3 to 1:7, including but not limited to discrete values such as 1:3, 1:4, 1:5, 1:6, or 1:7, or any continuous range between any two of the aforementioned values.

The mass ratio of the first azeotropic additive to the second azeotropic additive should neither be excessively small nor excessively large. If the mass ratio is excessively small, the relative amount of the first azeotropic additive is insufficient, resulting in a shortened duration for evaporation of water molecules carried by the first azeotropic additive and insufficient formation of micron-scale initial pores. Conversely, if the mass ratio is excessively large, the relative amount of the second azeotropic additive is insufficient, leading to a shortened duration for evaporation of water molecules carried by the second azeotropic additive and insufficient formation of submicron-scale transitional pores, thereby hindering the optimization of water molecule evaporation. Therefore, in some embodiments, the mass ratio of the first azeotropic additive to the second azeotropic additive is in a range of 1:3 to 1:7, such that a balance is achieved between the respective amounts of the first and second azeotropic additives, ensuring both additives effectively contribute to promoting the evaporation of water molecules.

The mass of the third azeotropic additive accounts for 0.1% to 0.3% of the mass of the negative active material, including but not limited to discrete values such as 0.1%, 0.12%, 0.15%, 0.18%, 0.2%, 0.25%, or 0.3%, or any continuous range between any two of the aforementioned values.

In some embodiments, the first azeotropic additive includes methyl acetate. This solvent possesses a low boiling point, high volatility, and moderate polarity, and is capable of forming an azeotropic system with water, thereby facilitating rapid water evaporation and the construction of initial pores, thereby significantly optimizing the drying kinetics of the negative plate. The low boiling point characteristic of methyl acetate (boiling point at 56.9 °C) enables preferential evaporation in the temperature range of 50 °C to 60 °C, resulting in the formation of micron-scale pores that provide rapid channels for subsequent water molecule escape.

In some embodiments, the second azeotropic additive is selected from at least one of tetrahydrofuran (whose boiling point at 66 °C), ethanol (whose boiling point at 78.4 °C), isopropyl alcohol (whose boiling point at 82.4 °C), or tert-butyl alcohol (whose boiling point at 82.5 °C). These solvents possess moderate boiling point ranges and can form a synergistic evaporation system with the first azeotropic additive, thereby significantly optimizing the drying process and pore structure of the negative plate. The tetrahydrofuran (whose boiling point at 66 °C), as a medium-boiling-point transition solvent, can form a continuous evaporation gradient with the first azeotropic additive (50 °C to 65 °C), constructing a permeable pore network. Similarly, ethanol, isopropyl alcohol, and tert-butyl alcohol can ensure stable evaporation within the range of 80 °C to 85 °C, forming even submicron pores to achieve optimized evaporation kinetics.

In some embodiments, the third azeotropic additive is preferably selected from at least one of acetonitrile (whose boiling point at 81.6 °C) or methyl ethyl ketone (whose boiling point at 79.6 °C). The cyano group (-C≡N) in acetonitrile can form intermolecular hydrogen bonds with the hydrogen atoms of water molecules, while the carbonyl group (-C=O) in methyl ethyl ketone can also form intermolecular hydrogen bonds with the hydrogen atoms of water molecules. Through hydrogen bonding interactions can delay the migration of water molecules, which helps to evenly disperse the water in the negative slurry, preventing local aggregation, reducing drying stress, and avoiding cracking of the negative plate. Furthermore, the boiling points of acetonitrile and methyl ethyl ketone are both higher than the boiling point of the first azeotropic additive (50 °C to 65 °C), allowing them to form a continuous evaporation gradient with the first azeotropic additive and construct a permeable pore network.

The acetonitrile is an organic compound with the chemical formula CH₃CN or C₂H₃N, and is a colorless, transparent liquid with excellent solvent properties, is capable of dissolving a wide variety of organic, inorganic, and gaseous substances, and is miscible with water and alcohols in all proportions. The boiling point of acetonitrile typically ranges from 81 °C to 82 °C, which is lower than that of water. As a third azeotropic additive, acetonitrile can evaporate prior to water during the drying process after coating. Due to its relatively high vapor pressure, the acetonitrile can promote the evaporation of water, thereby reducing the residual water content in the negative plate. Additionally, acetonitrile can form an azeotrope of low boiling point with water, significantly lowering the temperature required for water removal. Its strong polarity and miscibility ensure even dispersion of the solvent. An evaporation gradient is formed by reducing the surface tension of the negative slurry, optimizing the water migration path and facilitating the formation of a porous structure that accelerates evaporation. Furthermore, the acetonitrile can inhibit the gelation of the negative slurry and adjust the rheological properties to reduce agglomeration of active materials. The acetonitrile can also disrupt the hydrogen-bonding network of water molecules, lowering the risk of water retention, thereby achieving efficient and even drying.

Methyl ethyl ketone is a low-boiling-point polar additive with a low density and high vapor pressure. Methyl ethyl ketone is soluble in water, ethanol, ether, and other solvents. Its chemical formula is CH₃COCH₂CH₃, and its boiling point is 79.6°C. As a third azeotropic additive, methyl ethyl ketone evaporates prior to water during the drying process after coating, helping to remove residual water from the negative plate. The molecular structure of methyl ethyl ketone includes one carbonyl group (C=O) and two alkyl groups (methyl and ethyl), giving it high polarity, enabling it to form hydrogen bonds with water molecules. This interaction helps to evenly disperse water and prevent local aggregation. Additionally, methyl ethyl ketone can form an azeotropic mixture with water, optimizing the rheological properties of the negative slurry and reducing the occurrence of micropore closure caused by rapid solvent evaporation during drying. This helps to form continuous evaporation channels.

Tert-butyl alcohol has the chemical formula C₄H₁₀O and the structural formula (CH₃)₃COH. It is typically a colorless, transparent liquid with a boiling point of 82.4°C and exhibits moderate solubility in water. Due to its high vapor pressure, tert-butyl alcohol accelerates the desorption of water during the drying phase of the negative plate after coating. Its low surface tension facilitates the directional migration of water along three-dimensional channels. During the drying process, the crystallization properties of tert-butyl alcohol help form a stable ice crystal framework, enabling efficient low-temperature sublimation while suppressing structural stress and effectively controlling the shrinkage rate of the negative plate. Furthermore, its molecular structure not only improves the flowability of the negative slurry to enhance coating evenness, but also refines the pore structure through interface wetting control. Ultimately, this synergistically optimizes both the dehydration efficiency and the structural integrity of the negative plate, preventing warping and deformation.

Methyl acetate has the chemical formula CH₃COOCH₃ and a boiling point of 56.8°C. Due to its low boiling point and inherent properties, methyl acetate can also remove water from the negative slurry during the drying process after coating. The mechanism is primarily based on the synergistic effect of physical and chemical properties. Owing to its low boiling point, methyl acetate evaporates first, absorbing heat, and forms an azeotropic mixture with water, significantly lowering the temperature required for water removal. Its surface tension is much lower than that of water, promoting the migration of water to the surface of the negative slurry and reducing residual moisture. Additionally, the porous structure formed through rapidly evaporating creates channels for subsequent water escape. Furthermore, methyl acetate weakens the hydrogen bonding between water molecules by adjusting the solvent polarity, inhibiting aggregation caused by localized gelation, thus improving drying evenness.

In an example, the negative active material may be graphite, the first azeotropic additive may be methyl acetate, the second azeotropic additive may be isopropanol, and the third azeotropic additive may be acetonitrile. During the drying process, a continuous evaporation curve is formed following the sequential gradient evaporation trend of methyl acetate (whose boiling point at 56.9°C), acetonitrile (whose boiling point at 81.6°C), isopropanol (whose boiling point at 82.4°C), and the evaporation temperature window is set to the range of 56.9°C to 83°C, thus reducing energy consumption. Additionally, a continuous evaporation gradient is formed through the synergistic effect of rapid pore formation by methyl acetate, hydrogen bonding regulation by acetonitrile, and surface modification by isopropanol, constructing a permeable pore network that facilitates the evaporation of water molecules.

In other examples, the negative active material includes graphite, the first azeotropic additive includes methyl acetate, the second azeotropic additive includes a mixture of tetrahydrofuran and tert-butanol, with the mass ratio of tetrahydrofuran to tert-butanol ranging from 1:1 to 3:1. The third azeotropic additive includes acetonitrile. The boiling point of tetrahydrofuran is 66°C, and the boiling point of ethanol is 78.4°C.

For example, the first azeotropic additive is methyl acetate, the second azeotropic additive is a mixture of tetrahydrofuran and tert-butanol, with the mass ratio of tetrahydrofuran to tert-butanol ranging from 1:1 to 3:1, and the third azeotropic additive is acetonitrile.

In an example, the negative active material includes graphite. The first azeotropic additive includes methyl acetate. The second azeotropic additive includes a mixture of tetrahydrofuran, ethanol, and tert-butanol, with a mass ratio of tetrahydrofuran to ethanol to tert-butanol of (1~2):(1~2):(1~2). The third azeotropic additive includes acetonitrile. In this way, a three-stage gradient evaporation system can be formed during the post-coating drying process. Methyl acetate (56.9 °C) rapidly evaporates in the range of 50 °C to 60 °C to form primary pores with a size of 5 µm to 8 µm. Tetrahydrofuran (66 °C) evaporates in the range of 60 °C to 75 °C to construct transitional pores of 1 µm to 2 µm. Ethanol (78.4 °C) helps extend the low-temperature evaporation window and forms transitional pores of 1 µm to 3 µm. Tert-butanol (82.5 °C) and acetonitrile (81.6 °C) act synergistically in the range of 75 °C to 85 °C to generate pores of 300 nm to 800 nm.

In another example, the negative active material includes graphite. The first azeotropic additive includes a mixture of methyl acetate and ethanol, the second azeotropic additive includes isopropanol, and the third azeotropic additive includes acetonitrile. The mass ratio of methyl acetate to ethanol ranges from 1:1 to 3:1, such that the first azeotropic additive forms a binary low-temperature azeotropic system. During the post-coating drying process, methyl acetate rapidly evaporates to construct primary pores with a size of 5µm to 10µm, while ethanol helps extend the low-temperature evaporation window and facilitates the formation of transitional pores with a size of 1µm to 3µm.

For example, the first azeotropic additive includes a mixture of methyl acetate and ethanol, the second azeotropic additive is isopropanol, and the third azeotropic additive is acetonitrile. The mass ratio of methyl acetate to ethanol ranges from 1:1 to 3:1.

In other examples, the negative active material includes graphite, the first azeotropic additive includes methyl acetate, the second azeotropic additive includes ethanol and tert-butanol, and the mass ratio of tert-butanol to ethanol ranges from 1:1 to 1:3. The third azeotropic additive includes acetonitrile. For example, the first azeotropic additive may be methyl acetate, the second azeotropic additive may be a mixture of ethanol and tert-butanol, and the third azeotropic additive may be acetonitrile.

The coating method includes at least one of gravure coating, spray coating, and simultaneous coating.

In some embodiments, the drying treatment includes: providing a multi-section oven, where the negative current collector coated with the negative slurry sequentially enters sections of the multi-section oven for drying. The multi-section oven includes n sections, with the temperature of the first stage oven ranging from 60°C to 70°C, and the temperature of the n sections gradually increasing in the movement direction of the negative current collector, with the temperature of the nth section ranging from 80°C to 90°C. n is a positive integer greater than or equal to 10.

In the drying step of the embodiment of the present invention, there is no need to increase the oven temperature, increase the air frequency, or extend the drying time, thereby preventing the negative plate from cracking during the drying process. This helps to improve the safety performance and cycle life of the negative plate, reduces energy consumption, and enhances the efficiency of manufacturing the negative plate. It is beneficial for controlling time and economic costs in the manufacturing process of secondary batteries. Specifically, the temperature of the first section is set between 60°C and 70°C, and the temperature of the n sections gradually increases, with the temperature of the nth section reaching 80°C to 90°C. This gradual increase in temperature helps to prevent rapid temperature rise from affecting material stress. The temperature of the nth section being between 80°C and 90°C ensures the evaporation of the second and third azeotropic additives, thereby forming a gradient evaporation process.

In some embodiments, the multi-section oven further includes a b-section oven, which is positioned after the nth-section oven, where b is a positive integer greater than or equal to 2. Two consecutive sections are defined as one unit. The n sections are grouped into m units, with the temperature between adjacent units increasing and the temperature difference being equal, ranging from 5°C to 10°C. m is a positive integer greater than or equal to 6. The temperature of the (m+1)th unit (formed by the b-section oven) ranges from 70°C to 80°C. For example, the temperature of the first unit is 65°C, the second unit is 70°C, the third unit is 75°C, the fourth unit is 80°C, the fifth unit is 85°C, and the sixth unit is 75°C. Specifically, the drying time for each section is 6 seconds. Methyl acetate evaporates quickly in the first unit, tetrahydrofuran evaporates in the second unit, ethanol evaporates in the third unit, and tert-butyl alcohol and acetonitrile evaporate in the fifth unit. The treatment time for each unit is 12 seconds (for example, each section dries for 6 seconds). At 65°C in the first unit, the material is treated for 12 seconds, which is sufficient for the methyl acetate to evaporate, at 70°C in the second unit the material is treated for 12 seconds to allow the tetrahydrofuran to evaporate; and so on. In this way, the first, second, and third azeotropic additives have enough time to evaporate at their respective temperatures. The oven system achieves efficient staged evaporation of multiple solvents through gradient heating and unit design, without the need to extend the overall drying time.

In a second aspect, a secondary battery prepared by the above method is provided according to the embodiments of the present invention. It should be noted that the description of the secondary battery in the above embodiments is also applicable to the following secondary battery. To avoid repetition, the same or corresponding parts as those in the previous embodiments will not be repeated and can be referenced from the description of the previous embodiments. Referring to FIG 3 to FIG. 5, the secondary battery includes: a negative plate, a housing, a positive plate, and a separator. The positive plate, the separator, and the negative plate are wound or stacked and placed into the housing into which an electrolyte is injected. The negative plate includes a negative current collector 11 and a negative active material layer 12. The negative active material layer 12 is disposed on at least one surface of the negative current collector 11, and is obtained by drying the negative slurry. The moisture content in the negative plate is less than 922ppm.

In some embodiments, the housing is made from at least one of nickel-plated steel, aluminum alloy, and aluminum plastic film. In some embodiments, the positive plate includes a positive current collector and a positive active material layer, where the positive current collector may be made of aluminum foil.

The negative current collector 11 may be made from materials such as metal foil or porous metal plates, for example, foils or porous plates made of metals like copper, nickel, titanium, iron, or their alloys.

In some embodiments, the negative active material layer 12 is made from negative active material. The type of negative active material is not specifically restricted in the embodiments and may be selected based on actual needs. For example, the negative active material may be at least one of natural graphite, artificial graphite, mesophase carbon microbeads (MCMB), hard carbon, soft carbon, silicon, silicon-carbon composites, or metallic lithium.

The separator may be made from resin, glass fiber, or inorganic material. In some embodiments, there are no specific restrictions on the separator, and any known porous structure separator with electrochemical stability and chemical stability may be selected as the separator. For example, the separator may be a single-layer or multi-layer film made of at least one of glass fiber, non-woven fabric, polyethylene (PE), polypropylene (PP), and polyvinylidene fluoride (PVDF).

Taking a lithium-ion secondary battery as an example, the electrolyte includes a solvent, a lithium, and an additive. In the embodiments of the present invention, the solvent of the electrolyte may be any solvent known in the related art that may be used as an electrolyte solvent. In addition, the electrolyte according to the present invention may include additives, and the additives may be any additives known in the related art that may be used as electrolyte additives. For example, the lithium salt may be at least one selected from the group including: LiPF₆ (lithium hexafluorophosphate), LiBF₄ (lithium tetrafluoroborate), LiClO₄ (lithium perchlorate), LiAsF₆ (lithium hexafluoroarsenate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluorooxalate borate), LiBOB (lithium bis(oxalato)borate), LiPO₂F₂ (lithium difluorophosphate), LiDFOP (lithium difluorodioxalatophosphate), and LiTFOP (lithium tetrafluorodioxalatophosphate).

The above secondary battery may be, but is not limited to, an alkali metal secondary battery such as a lithium-ion secondary battery, a sodium-ion secondary battery, or an aluminum-ion secondary battery. The above secondary battery may also be, but is not limited to, a wound-type battery or a stacked-type battery.

In a third aspect, an energy storage system is provided according to embodiments of the present invention, which includes the above-described secondary battery.

Benefiting from the secondary battery provided in the third aspect of the embodiments of the present invention, the energy storage system can exhibit a relatively high energy density. In some embodiments of the present invention, the energy storage system includes an energy storage device and a power conversion system that are electrically connected. The energy storage device includes a housing cavity and a secondary battery accommodated within the housing cavity. The power conversion system is configured to perform power conversion on voltage and/or current, and to deliver the converted voltage and/or current to the energy storage device, thereby enabling the energy storage device to meet the demands of the electrical device.

In a fourth aspect, an electrical device is provided according to the embodiments of the present invention. The electrical device includes the above-described secondary battery and a load. The secondary battery is configured to supply power to the load.

The electrical device that employs the above-described secondary battery for power supply can exhibit strong market competitiveness. In some embodiments of the present invention, the electrical device includes, but is not limited to, 3C electronic products, such as mobile phones, notebook computers, tablet computers, unmanned aerial vehicles, and wearable electronic devices. The electrical device may further include electric vehicles, such as renewable energy vehicles and electric bicycles.

To describe the preparation method of the secondary battery provided in the embodiments of the present invention in more detail, various specific embodiments and comparative examples will be presented and described below in further detail.

### First embodiment

A dry powder mixture is prepared using 95.2 parts of negative active material, 1.6 parts of conductive agent, and 1.4 parts of dispersant. Deionized water is then added into the dry powder mixture as a solvent for continued mixing to obtain an initial slurry. Subsequently, a mixed solution of tert-butanol and methyl acetate (3: 1), in an amount equal to 0.2% of the mass of the graphite, is added to the initial slurry. Additional deionized water is added to the initial slurry for further mixing, followed by the addition of 1.8 parts of binder and stirring. Then, a mixture of methyl ethyl ketone and acetonitrile, accounting for 0.1% of the mass of the graphite and with a mass ratio of methyl ethyl ketone to acetonitrile of 1:3, is added to the initial slurry. This mixture is stirred evenly to obtain the negative slurry, which is then coated onto a copper foil at a coating speed of 15m/min. After drying, a negative plate is obtained.

Methyl acetate serves as the first azeotropic additive, tert-butanol serves as the second azeotropic additive, and methyl ethyl ketone together with acetonitrile serve as the third azeotropic additives. The negative active material is graphite, the conductive agent is carbon black, the binder is sodium carboxymethyl cellulose, and the dispersant is polyvinylpyrrolidone. The mass of deionized water in the initial slurry accounts for 60% of the total mass of the initial slurry.

The drying process adopts a multi-section oven with different temperature gradients. The oven includes twelve sections in total, where the temperature of the first ten oven sections gradually increases. The negative plate is placed in each section for 6 seconds. Specifically, the temperature of the first and second sections is 65 °C, the third and fourth sections is 70 °C, the fifth and sixth sections is 75 °C, the seventh and eighth sections is 80 °C; and the ninth and tenth sections is 85 °C. That is, n equals 10. The multi-section oven further includes an eleventh section and a twelfth section, and the temperature of both the eleventh and twelfth sections is 75 °C.

With reference to the first embodiment, changes are made to the first azeotropic additive, the second azeotropic additive, and the third azeotropic additive in the negative slurry, while the other steps remain unchanged, which are detailed in the following second to twenty-second embodiments.

### Second Embodiment

The total mass of the first azeotropic additive and the second azeotropic additive accounts for 0.2% of the mass of graphite, with the mass ratio of the first azeotropic additive to the second azeotropic additive being 1:3. The mass of the third azeotropic additive accounts for 0.1% of the mass of graphite. The negative active material includes graphite, with the first azeotropic additive being methyl acetate, the second azeotropic additive being isopropyl alcohol, and the third azeotropic additive being methyl ethyl ketone.

### Third Embodiment

The total mass of the first azeotropic additive and the second azeotropic additive accounts for 0.2% of the mass of graphite, with the mass ratio of the first azeotropic additive to the second azeotropic additive being 1:3. The mass of the third azeotropic additive accounts for 0.1% of the mass of graphite. The negative active material includes graphite, with the first azeotropic additive being methyl acetate, the second azeotropic additive being a mixture of tert-butanol and tetrahydrofuran (with a mass ratio of tert-butanol to tetrahydrofuran being 1:3), and the third azeotropic additive being acetonitrile.

### Fourth Embodiment

The total mass of the first azeotropic additive and the second azeotropic additive accounts for 0.2% of the mass of graphite, with the mass ratio of the first azeotropic additive to the second azeotropic additive being 1:3. The mass of the third azeotropic additive accounts for 0.1% of the mass of graphite. The negative active material includes graphite, with the first azeotropic additive being methyl acetate, the second azeotropic additive being a mixture of tert-butanol and ethanol (with a mass ratio of tert-butanol to ethanol being 1:3), and the third azeotropic additive being acetonitrile.

### Fifth Embodiment

The total mass of the first azeotropic additive and the second azeotropic additive accounts for 0.2% of the mass of graphite, with the mass ratio of the first azeotropic additive to the second azeotropic additive being 1:3. The mass of the third azeotropic additive accounts for 0.1% of the mass of graphite. The negative active material includes graphite, with the first azeotropic additive being methyl acetate, the second azeotropic additive being a mixture of tetrahydrofuran, tert-butanol, and ethanol (with a mass ratio of tetrahydrofuran to tert-butanol and to ethanol being 1:1:2), and the third azeotropic additive being acetonitrile.

### Sixth Embodiment

The total mass of the first azeotropic additive and the second azeotropic additive accounts for 0.2% of the mass of graphite, with the mass ratio of the first azeotropic additive to the second azeotropic additive being 1:3. The mass of the third azeotropic additive accounts for 0.1% of the mass of graphite. The negative active material includes graphite, with the first azeotropic additive being methyl acetate, the second azeotropic additive being a mixture of tetrahydrofuran, isopropyl alcohol, and ethanol (with a mass ratio of tetrahydrofuran to isopropyl alcohol and to ethanol being 1:1:2), and the third azeotropic additive being acetonitrile.

### Seventh Embodiment

The total mass of the first azeotropic additive and the second azeotropic additive accounts for 0.2% of the mass of graphite, with the mass ratio of the first azeotropic additive to the second azeotropic additive being 1:3. The mass of the third azeotropic additive accounts for 0.1% of the mass of graphite. The negative active material includes graphite, with the first azeotropic additive being methyl acetate, the second azeotropic additive being a mixture of tetrahydrofuran, tert-butanol, and ethanol (with a mass ratio of tetrahydrofuran to tert-butanol and to ethanol being 1:2:1), and the third azeotropic additive including acetonitrile.

### Eighth Embodiment

The total mass of the first azeotropic additive and the second azeotropic additive accounts for 0.2% of the mass of graphite, with the mass ratio of the first azeotropic additive to the second azeotropic additive being 1:3. The mass of the third azeotropic additive accounts for 0.1% of the mass of graphite. The negative active material includes graphite, with the first azeotropic additive being methyl acetate, the second azeotropic additive being a mixture of tetrahydrofuran, isopropyl alcohol, and ethanol (with a mass ratio of tetrahydrofuran to isopropyl alcohol and to ethanol being 1:2:1), and the third azeotropic additive being acetonitrile.

### Ninth Embodiment

The total mass of the first azeotropic additive and the second azeotropic additive accounts for 0.3% of the mass of graphite, with the mass ratio of the first azeotropic additive to the second azeotropic additive being 1:3. The mass of the third azeotropic additive accounts for 0.1% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 1:2:1), and the third azeotropic additive being acetonitrile.

### Tenth Embodiment

The total mass of the first azeotropic additive and the second azeotropic additive accounts for 0.5% of the mass of graphite, with the mass ratio of the first azeotropic additive to the second azeotropic additive being 1:3. The mass of the third azeotropic additive accounts for 0.1% to the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 1:2:1), and the third azeotropic additive being acetonitrile.

### Eleventh Embodiment

The total mass of the first azeotropic additive and the second azeotropic additive accounts for 0.4% of the mass of graphite, with the mass ratio of the first azeotropic additive to the second azeotropic additive being 1:3. The mass of the third azeotropic additive accounts for 0.1% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 1:2:1), and the third azeotropic additive being acetonitrile.

### Twelfth Embodiment

The total mass of the first azeotropic additive and the second azeotropic additive accounts for 0.2% of the mass of graphite, with the mass ratio of the first azeotropic additive to the second azeotropic additive being 1:3. The mass of the third azeotropic additive accounts for 0.3% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 1:2:1), and the third azeotropic additive being acetonitrile.

### Thirteenth Embodiment

The total mass of the first azeotropic additive and the second azeotropic additive accounts for 0.1% of the mass of graphite, with the mass ratio of the first azeotropic additive to the second azeotropic additive being 1:3. The mass of the third azeotropic additive accounts for 0.3% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 1:2:1), and the third azeotropic additive being acetonitrile.

### Fourteenth Embodiment

The total mass of the first azeotropic additive and the second azeotropic additive accounts for 0.2% of the mass of graphite, with the mass ratio of the first azeotropic additive to the second azeotropic additive being 1:5. The mass of the third azeotropic additive accounts for 0.3% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 1:2:1), and the third azeotropic additive being acetonitrile.

### Fifteenth Embodiment

The total mass of the first azeotropic additive and the second azeotropic additive accounts for 0.2% of the mass of graphite, with the mass ratio of the first azeotropic additive to the second azeotropic additive being 1:7. The mass of the third azeotropic additive accounts for 0.3% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 1:2:1), and the third azeotropic additive being acetonitrile.

### Sixteenth Embodiment

The total mass of the first azeotropic additive and the second azeotropic additive accounts for 0.3% of the mass of graphite, with the mass ratio of the first azeotropic additive to the second azeotropic additive being 1:3. The mass of the third azeotropic additive accounts for 0.2% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 2:1:1), and the third azeotropic additive being acetonitrile.

### Seventeenth Embodiment

The total mass of the first azeotropic additive and the second azeotropic additive accounts for 0.3% of the mass of graphite, with the mass ratio of the first azeotropic additive to the second azeotropic additive being 1:5. The mass of the third azeotropic additive accounts for 0.2% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 2:1:1), and the third azeotropic additive being methyl ethyl ketone.

### Eighteenth Embodiment

The total mass of the first azeotropic additive and the second azeotropic additive accounts for 0.3% of the mass of graphite, with the mass ratio of the first azeotropic additive to the second azeotropic additive being 1:5. The mass of the third azeotropic additive accounts for 0.2% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 2:1:1), and the third azeotropic additives being a mixture of acetonitrile and methyl ethyl ketone, with a mass ratio of acetonitrile to methyl ethyl ketone being 3: 1.

### Nineteenth Embodiment

The total mass of the first azeotropic additive and the second azeotropic additive accounts for 0.3% of the mass of graphite, with the mass ratio of the first azeotropic additive to the second azeotropic additive being 1:5. The mass of the third azeotropic additive accounts for 0.2% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 2:1:1), and the third azeotropic additives being a mixture of acetonitrile and methyl ethyl ketone, with a mass ratio of acetonitrile to methyl ethyl ketone being 2:1.

### Twentieth Embodiment

The total mass of the first azeotropic additive and the second azeotropic additive accounts for 0.3% of the mass of graphite, with the mass ratio of the first azeotropic additive to the second azeotropic additive being 1:5. The mass of the third azeotropic additive accounts for 0.2% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 2:1:1), and the third azeotropic additives being a mixture of acetonitrile and methyl ethyl ketone, with a mass ratio of acetonitrile to methyl ethyl ketone being 1:1.

### Twenty-first Embodiment

The total mass of the first azeotropic additive and the second azeotropic additive accounts for 0.3% of the mass of graphite, with the mass ratio of the first azeotropic additive to the second azeotropic additive being 1:5. The mass of the third azeotropic additive accounts for 0.2% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 2:1:1), and the third azeotropic additives being a mixture of acetonitrile and methyl ethyl ketone, with a mass ratio of acetonitrile to methyl ethyl ketone being 1:2.

### Twenty-second Embodiment

The total mass of the first azeotropic additive and the second azeotropic additive accounts for 0.3% of the mass of graphite, with the mass ratio of the first azeotropic additive to the second azeotropic additive being 1:5. The mass of the third azeotropic additive accounts for 0.2% of the mass of graphite. The negative active material includes graphite, with the first azeotropic additive being methyl acetate, the second azeotropic additive being a mixture of tetrahydrofuran, tert-butanol and ethanol (with a mass ratio of tetrahydrofuran to tert-butanol and to ethanol being 2:1:1), and the third azeotropic additives being a mixture of acetonitrile and methyl ethyl ketone, with a mass ratio of acetonitrile to methyl ethyl ketone being 1:3.

### First comparative example

The initial slurry is prepared by homogenizing the materials (that is, the graphite, the conductive agent, the dispersing agent, and the binder) in the same proportions as in the first embodiment, without adding the first azeotropic additive, the second azeotropic additive, and the third azeotropic additive. This initial slurry serves as the negative slurry, which is then coated onto a copper foil at a coating speed of 15 m/min. After drying, the negative plate is obtained.

### Second comparative example

The initial slurry is prepared by mixing the materials (that is, the graphite, the conductive agent, the dispersing agent, and the binder) in the same proportions as in the first embodiment. Then, acetonitrile, accounting for 0.3% by mass of the graphite, is added to the initial slurry and stirred thoroughly to obtain the negative slurry. The negative slurry is then coated onto a copper foil at a coating speed of 15 m/min. After drying, the negative plate is obtained.

### Third comparative example

The initial slurry is prepared by mixing the materials (that is, the graphite, the conductive agent, the dispersing agent, and the binder) in the same proportions as in the first embodiment. Then, tert-Butanol, accounting for 0.3% by mass of the graphite, is added to the initial slurry and stirred thoroughly to obtain the negative slurry. The negative slurry is then coated onto a copper foil at a coating speed of 15 m/min. After drying, the negative plate is obtained.

### Fourth comparative example

The initial slurry is prepared by mixing the materials (that is, the graphite, the conductive agent, the dispersing agent, and the binder) in the same proportions as in the first embodiment. Then, methyl acetate, accounting for 0.3% by mass of the graphite, is added to the initial slurry and stirred thoroughly to obtain the negative slurry. The negative slurry is then coated onto a copper foil at a coating speed of 15 m/min. After drying, the negative plate is obtained.

### Fifth comparative example

The initial slurry is prepared by mixing the materials (that is, the graphite, the conductive agent, the dispersing agent, and the binder) in the same proportions as in the first embodiment. Then, methyl ethyl ketone, accounting for 0.3% by mass of the graphite, is added to the initial slurry and stirred thoroughly to obtain the negative slurry. The negative slurry is then coated onto a copper foil at a coating speed of 15 m/min. After drying, the negative plate is obtained.

### Sixth comparative example

The initial slurry is prepared by mixing the materials (that is, the graphite, the conductive agent, the dispersing agent, and the binder) in the same proportions as in the first embodiment. Then, methyl acetate, accounting for 0.3% by mass of the graphite, and methyl ethyl ketone, accounting for 0.2% by mass of the graphite, are added to the initial slurry. After thorough stirring, the negative slurry is obtained. The negative slurry is coated onto a copper foil at a coating speed of 15 m/min. After drying, the negative plate is obtained.

### Seventh comparative example

The initial slurry is prepared by mixing the materials (that is, the graphite, the conductive agent, the dispersing agent, and the binder) in the same proportions as in the first embodiment. Then, methyl acetate and tert-butanol, in a total mass accounting for 0.3% of the mass of the graphite and with a mass ratio of 1:3, are added to the initial slurry. The mixture was stirred evenly to obtain the negative slurry, which was then coated onto a copper foil at a coating speed of 15 m/min. After drying, the negative plate was obtained.

### Eighth comparative example

The initial slurry is prepared by mixing the materials (that is, the graphite, the conductive agent, the dispersing agent, and the binder) in the same proportions as in the first embodiment. Then tert-butanol, accounting for 0.3% by mass of the graphite, and acetonitrile, accounting for 0.2% by mass of the graphite, are added to the initial slurry. After thorough stirring, the negative slurry is obtained. The negative slurry is coated onto a copper foil at a coating speed of 15 m/min. After drying, the negative plate is obtained.

### Ninth comparative example

The initial slurry is prepared by mixing the materials (that is, the graphite, the conductive agent, the dispersing agent, and the binder) in the same proportions as in the first embodiment. Then, isopropanol and tert-butanol, having a mass ratio of 1:1 and a total mass accounting for 0.3% of the mass of the graphite, and acetonitrile, accounting for 0.2% of the mass of the graphite, are added to the initial slurry. After thorough stirring, the negative slurry is obtained. The negative slurry is coated onto a copper foil at a coating speed of 15 m/min. After drying, the negative plate is obtained.

### Tenth comparative example

The initial slurry is prepared by mixing the materials (that is, the graphite, the conductive agent, the dispersing agent, and the binder) in the same proportions as in the first embodiment. Isopropanol and tert-butanol, having a total mass accounting for 0.3% of the mass of the graphite, and acetonitrile, accounting for 0.2% of the mass of the graphite, are then added to the initial slurry. After thorough stirring, the negative slurry was obtained. The negative slurry is coated onto a copper foil at a coating speed of 15 m/min, and dried to obtain the negative plate.

### Eleventh comparative example

The initial slurry is prepared by mixing the materials (that is, the graphite, the conductive agent, the dispersing agent, and the binder) in the same proportions as in the first embodiment. Isopropanol and tert-butanol, having a total mass accounting for 0.3% of the mass of the graphite, and methyl ethyl ketone, accounting for 0.2% of the mass of the graphite, are then added to the initial slurry. After thorough stirring, the negative slurry is obtained. The negative slurry is coated onto a copper foil at a coating speed of 15 m/min, and dried to obtain the negative plate.

### Twelfth comparative example

The initial slurry is prepared by mixing the materials (that is, the graphite, the conductive agent, the dispersing agent, and the binder) in the same proportions as in the first embodiment. A mixture of tetrahydrofuran, isopropanol, and ethanol is then added to the initial slurry, the total mass of the mixture accounting for 0.3% of the mass of the graphite, and the mass ratio of tetrahydrofuran to isopropanol and to ethanol is 1:1:2. Additionally, acetonitrile is added in mass accounting for 0.2% of the mass of the graphite. The mixture is evenly stirred to obtain the negative slurry, which is then coated onto a copper foil at a coating speed of 15 m/min. After drying, the negative plate is obtained.

### Thirteenth comparative example

The initial slurry is prepared by mixing the materials (that is, the graphite, the conductive agent, the dispersing agent, and the binder) in the same proportions as in the first embodiment. Then, a mixture of methyl acetate, tetrahydrofuran, isopropanol, and ethanol, having a total mass accounting for 0.3% of the mass of graphite, is added to the initial slurry. The mass ratio of methyl acetate to the sum of tetrahydrofuran, isopropanol, and ethanol is 1:3, with the mass ratio of tetrahydrofuran, isopropanol, and ethanol being 1:1:2. Additionally, acetonitrile, accounting for 0.2% of the mass of graphite, is added. The mixture is stirred evenly to obtain the negative slurry, which is then coated onto a copper foil at a coating speed of 15 m/min. After drying, the negative plate is obtained.

### Preparation of Lithium-Ion Batteries

The positive active material (lithium phosphate), the conductive agent (Super P), and the positive binder (polyvinylidene fluoride) are mixed with a solvent (N-Methylpyrrolidone) in a mass ratio of 96.5:1.0:2.5. The mixture is stirred thoroughly to obtain the positive slurry. This positive slurry is then applied to both sides of the positive current collector (aluminum foil) by coating equipment. After drying, cold pressing, and tab welding, the positive plate is obtained.

The negative plate is prepared according to the steps provided in the above embodiments.

The separator is prepared by forming an antioxidant layer (specifically including ceramics and boehmite) on the base membrane (specifically including polypropylene) with the binder (specifically polyvinylidene fluoride).

The positive plate, the separator, and the negative plate prepared according to the above embodiments and comparative examples are subjected to either winding or stacking treatment and then placed into the battery housing. The separator is positioned between the positive and negative plates. Electrolyte is then injected into the housing to obtain the lithium-ion secondary batteries of the embodiments and comparative examples. The electrolyte is a 1 mol/L LiPF6 solution, with the electrolyte solvent being a mixture of ethylene carbonate, diethyl carbonate, and dimethyl carbonate in a volume ratio of 1:1:1.

### Testing

### (1) Viscosity Test

The stirred negative slurry is tested for viscosity (using a #4 rotor at a speed of 12 rpm) by a rotational viscometer (specific model of IKA ROTAVISC lo-vi Complete) at a temperature of 25±2°C. The test is terminated after 3 minutes.

### (2) Moisture Residue in Negative plate

The moisture content in the negative plate is determined using the Karl Fischer method. A moisture analyzer is coupled with a Carl furnace to enable fast and accurate measurement of the moisture content in the battery electrodes. The sample preparation process for solid samples involves weighing approximately 1g of shredded negative plate by an electronic balance, placing it into a sample vial, and sealing it with a capper to maintain the moisture content of the sample. The gas from the encapsulated environment is sealed in the sample vial with the capper to serve as the blank test vial. For testing the moisture content of the battery electrode sheet, the solid sample requires heating in a furnace. The airflow system should not be stopped until the experiment is completed and the sample has cooled to room temperature to prevent the Karl Fischer reagent from being sucked back into the heating device. The test instrument parameters are set as a carrier gas flow rate of 50 mL/min, a heating temperature of 120°C, and a termination time of 300 seconds.

### (3) Negative plate Weight Loss Rate Test

The weight loss rate of the coated and dried negative plate is measured using a Sartorius drying weight loss tester. The test rate is 0.1% per 24 seconds, and the termination temperature is 130°C.

### (4) Negative plate Film Resistance Test

The negative plate, which has been coated, dried, and roll-pressed, is tested for film resistance using an electrode sheet resistance meter. Five different locations on the negative plate are tested each time, and the average value is taken as the test result.

### (5) Battery Performance Test

The lithium-ion batteries prepared according to each embodiment and comparative example are subjected to a nuclear capacity test at 25°C with a 0.2C charge rate, followed by constant current discharge to 2.5V and then allowed to rest for 30 minutes.

After being stored at 55°C for 4 hours, the lithium-ion battery is charged with a constant current/constant voltage at 0.5C to 3.65V (cut-off at 0.05C). After resting for 30 minutes, the lithium-ion battery is discharged with a constant current of 0.5C to 2.5V, followed by another 30-minute rest, such that one cycle is finished. After 500 cycles, the capacity retention of the battery is recorded. The first cycle coulombic efficiency is calculated as the ratio of the first charge specific capacity to the discharge specific capacity, multiplied by 100%. Capacity retention is calculated as the ratio of the capacity after 500 cycles to the capacity after the first cycle, multiplied by 100%.

### Results Analysis

The test results of performance indicators about the negative slurry, the negative plate, and the lithium-ion battery are shown in Table 1.

**Table 1**

| No. | Slurry Viscosity (mPa·s) | Moisture Residue in Negative plate (ppm) | Negative plate Weight Loss Rate (%) | Negative plate Film Resistance (Ω·mm) | First Cycle Coulombic Efficiency (%) | Capacity Retention After 500 Cvcles(%) |
|---|---|---|---|---|---|---|
| Embodiment 1 | 8500 | 843 | 0.35 | 5.483291 | 94.15 | 95.32 |
| Embodiment 2 | 8700 | 795 | 0.33 | 5.157638 | 94.33 | 95.55 |
| Embodiment 3 | 8850 | 848 | 0.35 | 5.529465 | 94.18 | 95.36 |
| Embodiment 4 | 8550 | 892 | 0.37 | 5.864203 | 94.06 | 95.11 |
| Embodiment 5 | 8300 | 733 | 0.30 | 4.395712 | 94.36 | 95.63 |
| Embodiment 6 | 8350 | 818 | 0.34 | 5.221845 | 94.27 | 95.48 |
| Embodiment 7 | 8500 | 792 | 0.33 | 5.108974 | 94.30 | 95.57 |
| Embodiment 8 | 8650 | 917 | 0.38 | 5.236129 | 94.11 | 95.09 |
| Embodiment 9 | 8900 | 945 | 0.39 | 5.440356 | 94.07 | 95.01 |
| Embodiment 10 | 9000 | 922 | 0.38 | 5.313582 | 94.09 | 95.06 |
| Embodiment 11 | 8600 | 870 | 0.36 | 5.259187 | 94.12 | 95.30 |
| Embodiment 12 | 9050 | 703 | 0.29 | 4.231678 | 94.50 | 95.66 |
| Embodiment 13 | 9000 | 759 | 0.31 | 4.802563 | 94.33 | 95.59 |
| Embodiment 14 | 8850 | 828 | 0.35 | 5.345891 | 94.20 | 95.39 |
| Embodiment 15 | 8300 | 795 | 0.33 | 5.145891 | 94.29 | 95.58 |
| Embodiment 16 | 8150 | 729 | 0.30 | 4.387425 | 94.37 | 95.64 |
| Embodiment 17 | 8300 | 766 | 0.31 | 4.928739 | 94.31 | 95.60 |
| Embodiment 18 | 8600 | 677 | 0.28 | 4.154316 | 94.57 | 95.72 |
| Embodiment 19 | 8900 | 799 | 0.33 | 5.276204 | 9428 | 95.56 |
| Embodiment 20 | 8450 | 602 | 0.25 | 3.919047 | 94.71 | 95.88 |
| Embodiment 21 | 8650 | 722 | 0.30 | 4.362758 | 94.39 | 95.65 |
| Embodiment 22 | 8800 | 699 | 0.29 | 4.093641 | 94.52 | 95.69 |
| Comparative example 1 | 8100 | 1598 | 0.66 | 7.590324 | 91.49 | 91.22 |
| Comparative example 2 | 8200 | 1284 | 0.53 | 6.763802 | 92.55 | 92.30 |
| Comparative example 3 | 8350 | 1426 | 0.59 | 6.948159 | 92.03 | 91.73 |
| Comparative example 4 | 8400 | 1377 | 0.57 | 6.505836 | 92.41 | 92.06 |
| Comparative example 5 | 8250 | 1323 | 0.55 | 6.437621 | 92.46 | 92.20 |
| Comparative example 6 | 8600 | 1299 | 0.54 | 6.289473 | 92.48 | 92.23 |
| Comparative example 7 | 8500 | 1257 | 0.52 | 6.152904 | 92.51 | 92.29 |
| Comparative example 8 | 8300 | 1134 | 0.47 | 5.876215 | 93.37 | 93.69 |
| Comparative example 9 | 8550 | 1139 | 0.47 | 5.914067 | 93.33 | 93.62 |
| Comparative example 10 | 8600 | 1029 | 0.43 | 5.639428 | 93.66 | 94.02 |
| Comparative example 11 | 8700 | 1001 | 0.42 | 5.281753 | 93.72 | 94.08 |
| Comparative example 12 | 8750 | 1088 | 0.45 | 5.703192 | 93.44 | 93.81 |
| Comparative example 13 | 8850 | 989 | 0.41 | 5.120549 | 93.97 | 94.13 |

The test results show that after adding the first, second, and third azeotropic additives into the negative slurry system, the system viscosity increases in a controllable manner. The viscosity values range from 8500 mPa·s to 9050 mPa·s, which is an increase of less than 10% compared to Comparative Example 1 (viscosity of 8100 mPa·s), where no azeotropic additives are added. This is mainly because the first, second, and third azeotropic additives can form azeotropic mixtures with water molecules, and the third azeotropic additive can form hydrogen bonds with water molecules, preventing local aggregation during evaporation. However, due to the total mass of the three azeotropic additives being controlled within 0.8% of the mass of graphite, the viscosity increase is not significant and does not adversely affect the subsequent coating process.

The performance test results of moisture residue in the negative plate show that the moisture content in the negative plate can be reduced by adding a ternary synergistic dehydration system formed by a specific ratio of the first, second, and third azeotropic additives. Specifically, the moisture residue in the negative plates of Embodiments 1 to 22 is controlled within the range of 602 ppm to 922 ppm, which is a reduction of 54.3% to 62.3% compared to Comparative Example 1 (moisture residue of 1598 ppm), where no additives are added. Compared to single-component systems (Comparative Example 2 to Comparative Example 5 with moisture residue of 1323 ppm to 1426 ppm) and two-component systems (Comparative Example 6 to Comparative Example 8 with moisture residue of 1134 ppm to 1299 ppm), the improvements are 35.2% to 57.8% and 20.5% to 53.4%, respectively. Furthermore, even when compared to Comparative Examples 9 to 13, which involve the addition of three or more components (moisture residue of 989 ppm to 1139 ppm), the ternary azeotropic system still demonstrates superior dehydration performance. The highest moisture residue (922 ppm) is 6.8% lower than the lowest value of Comparative Example (989 ppm), which fully validates the unique advantages of the ternary azeotropic dehydration system.

Additionally, the three azeotropic additives, through their boiling point gradient distribution and complementary polar characteristics, construct a multi-stage dehydration network. That is, the first azeotropic additive (boiling point between 50°C and 65°C) preferentially forms a low-boiling azeotrope with free water. The second azeotropic additive (boiling point between 65°C and 85°C) further removes water in depth. The third azeotropic additive (boiling point below 100°C) inhibits water reabsorption through intermolecular forces. The additive system including methyl acetate (or tetrahydrofuran), tert-butyl alcohol and ethanol (or acetonitrile), as used in Embodiment 20, performs the best overall. The second azeotropic additive, which includes tetrahydrofuran, tert-butyl alcohol and ethanol, further facilitates the evaporation of water molecules, maximizing the reduction of water content in the negative plate.

Furthermore, to verify the above experimental results, the weight loss rate of the negative plate was measured after drying the negative plate from Embodiments 1 to 22. The results indicate that the ternary synergistic dehydration system formed by a specific ratio of the first, second, and third azeotropic additives is capable of reducing the weight loss rate of the negative plate. Specifically, the weight loss rate of the negative plate in Embodiments 1 to 22 range from 0.25% to 0.39%, which is the lowest compared to Comparative Example 1 (weight loss rate of 0.66%), with a reduction of 40.9% to 62.1% in moisture residue. Compared to the single-component system (Comparative Examples 2 to 5 with weight loss rate of 0.47% to 0.59%) and the two-component system (Comparative Examples 6 to 8 with weight loss rate of 0.47% to 0.54%), the improvements achieved are 17.0% to 57.6% and 17.0% to 53.7%, respectively. Even when compared to Comparative Examples 9 to 13, which involve three or more components (with weight loss rate of 0.41% to 0.47%), Embodiments 1 to 22 still exhibit better weight loss rate (0.39%) being 5.1% lower than the lowest value (0.41%) in all Comparative Examples, further confirming the excellent dehydration effect of the multi-component synergistic formula in Embodiments 1 to 22.

Based on the excellent dehydration advantages of Embodiments 1 to 22, the negative plates from these embodiments were assembled into lithium-ion secondary batteries to verify their electrochemical cycling performance. The results show that the negative plate film resistance of Embodiments 1 to 22 ranges from 3.919047Ω·mm to 5.529465Ω·mm, which is lower compared to the negative plate film resistance of Comparative Examples 1 to 13 (ranging from 5.120549Ω·mm to 7.590324Ω·mm). The first-cycle Coulombic efficiency of Embodiments 1 to 22 is between 94.11% and 94.57%, with all lithium-ion batteries having a first-cycle Coulombic efficiency greater than 94%. This is an improvement compared to the first-cycle Coulombic efficiency of the negative plates in Comparative Examples 1 to 13 (ranging from 91.49% to 93.97%). The capacity retention after 500 cycles for Embodiments 1 to 22 ranges from 95.11% to 95.88%, with all lithium-ion secondary batteries maintaining a capacity retention greater than 95% after 500 cycles. This is an improvement compared to the capacity retention of Comparative Examples 1 to 13 (ranging from 91.22% to 94.13%). The enhancement in the cycling performance of the lithium-ion secondary batteries in these embodiments is attributed to the reduction of water molecules in the negative plate, which minimizes the occurrence of side reactions, reduces electrolyte decomposition, and lowers charge transfer resistance, thereby improving the overall cycling performance of the lithium-ion secondary batteries.

In summary, the water molecules in the negative plate can disrupt the conductive network formed by the conductive additives, making the electron transport path in the negative plate more complex and tortuous, which adversely affects the electrochemical cycling performance of lithium-ion secondary batteries. The embodiments of the present invention demonstrate that by adding the first, second, and third azeotropic additives into the negative slurry system, it is possible to significantly reduce the moisture residue and film resistance in the negative plate without altering coating, drying, or other process conditions. Additionally, the first-cycle Coulombic efficiency and cycling performance of the lithium-ion battery are improved, thus mitigating the negative impact of water residue in the negative plate on the cycling performance of the lithium-ion secondary battery to some extent.

A person of ordinary skill in the art would understand that the above embodiments are specific implementations of this application. In practical applications, various changes can be made to the form and details without departing from the scope of the present invention. Any person skilled in the art can make various modifications and changes without departing from the scope of this application. Therefore, the scope of protection of this application should be defined by the claims.

## Claims

1. A method for preparing a secondary battery, **characterized in that** the method comprises:
preparing a negative plate, wherein the negative plate is prepared by:
preparing an initial slurry including a negative active material;
adding a first azeotropic additive, a second azeotropic additive, and a third azeotropic additive to the initial slurry and mixing all of them to obtain a negative slurry, wherein the first, second, and third azeotropic additives together with water molecules in the negative slurry form an azeotropic mixture having an azeotropic point lower than 100°C, the first azeotropic additive has a boiling point ranging from 50°C to 65°C, the second azeotropic additive has a boiling point ranging from 65°C to 85°C, the third azeotropic additive has a boiling point higher than that of the first azeotropic additive and lower than 100°C, and the third azeotropic additive forms hydrogen bonds with the water molecules; and
coating the negative slurry onto a surface of a negative current collector, and performing a drying treatment at a temperature lower than 100°C to obtain the negative plate; and
providing a positive plate and a separator, winding or stacking the positive plate, the separator, and the negative plate, placing them into a housing, and injecting an electrolyte into the housing to form the secondary battery.

2. The method according to claim 1, wherein at least one of the first azeotropic additive, the second azeotropic additive, and the third azeotropic additive is a polar solvent.

3. The method according to claim 1, wherein the boiling point of the first azeotropic additive ranges from 50°C to 55°C, and the boiling point of the second azeotropic additive ranges from 80°C to 85°C.

4. The method according to claim 1, wherein, in the negative slurry, the first and second azeotropic additives account for 0.2% to 0.5% by mass of the negative active material, a mass ratio of the first azeotropic additive to the second azeotropic additive ranges from 1:3 to 1:7, and the third azeotropic additive accounts for 0.1% to 0.3% by mass of the negative active material.

5. The method according to any one of claims 1 to 4, wherein
the first azeotropic additive comprises methyl acetate;
the second azeotropic additive comprises at least one of tetrahydrofuran, ethanol, isopropanol, and tert-butyl alcohol; and
the third azeotropic additive comprises at least one of acetonitrile or methyl ethyl ketone.

6. The method according to claim 5, wherein the negative active material comprises graphite, the first azeotropic additive comprises methyl acetate, the second azeotropic additive comprises isopropanol, and the third azeotropic additive comprises acetonitrile.

7. The method according to claim 5, wherein the negative active material comprises graphite, the first azeotropic additive comprises methyl acetate, the second azeotropic additive comprises a mixture of tetrahydrofuran, ethanol and tert-butyl alcohol with a mass ratio being (1~2):(1~2):(1~2), and the third azeotropic additive comprises acetonitrile.

8. The method according to claim 5, wherein the negative active material comprises graphite, the first azeotropic additive comprises methyl acetate, the second azeotropic additive comprises a mixture of ethanol and tert-butyl alcohol with a mass ratio ranging from 1:1 to 1:3, and the third azeotropic additive comprises acetonitrile.

9. The method according to any one of claims 1 to 8, wherein the drying treatment comprises:
providing a multi-section oven, wherein the negative current collector coated with the negative slurry sequentially enters sections of the multi-section oven for drying,
wherein the multi-section oven comprises n sections, the first section has a temperature ranging from 60°C to 70°C, and the temperature of the n sections gradually increases in the direction of movement of the negative current collector, with the temperature of the nth section ranging from 80°C to 90°C.

10. The method according to claim 9, wherein the multi-section oven further includes a b-section oven, positioned after the nth-section oven, where b is a positive integer greater than or equal to 2;
wherein two consecutive sections are defined as one unit, the n sections are grouped into m units, with the temperature between adjacent units increasing and the temperature difference being equal, ranging from 5°C to 10°C;
m is a positive integer greater than or equal to 6;
the temperature of the (m+1)th unit (formed by the b-section oven) ranges from 70°C to 80°C.

11. The method according to any one of claims 1 to 10, wherein the initial slurry is formed by mixing the negative active material with a conductive agent, a dispersant, a binder, and deionized water.

12. The method according to claim 11, wherein the initial slurry is obtained by:
preparing a dry powder mixture using 95.2 parts of negative active material, 1.6 parts of conductive agent, and 1.4 parts of dispersant; and
adding deionized water into the dry powder mixture as a solvent for continued mixing.

13. A secondary battery prepared by the method according to any one of claims 1 to 12, wherein the secondary battery comprises:
a negative plate, comprising a negative current collector and a negative active material layer, wherein the negative active material layer is disposed on at least one surface of the negative current collector, and the negative active material layer is obtained by drying the negative slurry, moisture content of the negative plate being less than 922 ppm; and
a housing, a positive plate, and a separator, wherein the positive plate, the separator, and the negative plate are wound or stacked and placed into the housing into which an electrolyte is injected.

14. An energy storage system, comprising the secondary battery according to claim 13.

15. An electrical device, comprising the secondary battery according to claim 13 and a load, wherein the secondary battery is configured to supply power to the load.

## Amended claims

### Amended claims in accordance with Rule 137(2) EPC.

1. A method for preparing a secondary battery, **characterized in that** the method comprises:
preparing a negative plate, wherein the negative plate is prepared by:
preparing an initial slurry including a negative active material, wherein the initial slurry is a water-based slurry;
adding a first azeotropic additive, a second azeotropic additive, and a third azeotropic additive to the initial slurry and mixing all of them to obtain a negative slurry, wherein:
the first, second, and third azeotropic additives together with water molecules in the negative slurry form an azeotropic mixture having an azeotropic point lower than 100°C;
the first azeotropic additive has a boiling point ranging from 50°C to 65°C and is selected from methyl acetate;
the second azeotropic additive has a boiling point ranging from 65°C to 85°C and is selected from at least one of tetrahydrofuran, ethanol, isopropanol, and tert-butanol;
the third azeotropic additive has a boiling point higher than that of the first azeotropic additive and lower than 100°C, is selected from at least one of acetonitrile and methyl ethyl ketone, and forms hydrogen bonds with the water molecules; and
the total mass of the first synergistic evaporation additive and the second synergistic evaporation additive accounts for 0.2%-0.5% of the mass of the negative active material, a mass ratio of the first azeotropic additive to the second azeotropic additive ranges from 1:3 to 1:7, and the mass of the third synergistic evaporation additive accounts for 0.1%-0.3% of the mass of the negative active material;
coating the negative slurry onto a surface of a negative current collector (11), and performing a drying treatment at a temperature lower than 100°C to obtain the negative plate; and
providing a positive plate and a separator, winding or stacking the positive plate, the separator, and the negative plate, placing them into a housing, and injecting an electrolyte into the housing to form the secondary battery.

2. The method according to claim 1, wherein at least one of the first azeotropic additive, the second azeotropic additive, and the third azeotropic additive is a polar solvent.

3. The method according to claim 1, wherein the boiling point of the first azeotropic additive ranges from 50°C to 55°C, and the boiling point of the second azeotropic additive ranges from 80°C to 85°C.

4. The method according to claim 1, wherein the negative active material comprises graphite, the second azeotropic additive is selected from isopropanol, and the third azeotropic additive is selected from acetonitrile.

5. The method according to claim 1, wherein the negative active material comprises graphite, the second azeotropic additive is selected from a mixture of tetrahydrofuran, ethanol and tert-butyl alcohol with a mass ratio being (1~2):(1~2):(1~2), and the third azeotropic additive is selected from acetonitrile.

6. The method according to claim 1, wherein the negative active material comprises graphite, the second azeotropic additive is selected from a mixture of ethanol and tert-butyl alcohol with a mass ratio ranging from 1:1 to 1:3, and the third azeotropic additive is selected from acetonitrile.

7. The method according to any one of claims 1 to 6, wherein the drying treatment comprises:
providing a multi-section oven, wherein the negative current collector (11) coated with the negative slurry sequentially enters sections of the multi-section oven for drying,
wherein the multi-section oven comprises n sections, the first section has a temperature ranging from 60°C to 70°C, and the temperature of the n sections gradually increases in the direction of movement of the negative current collector (11), with the temperature of the nth section ranging from 80°C to 90°C.

8. The method according to claim 7, wherein the multi-section oven further includes a b-section oven, positioned after the nth-section oven, where b is a positive integer greater than or equal to 2;
wherein two consecutive sections are defined as one unit, the n sections are grouped into m units, with the temperature between adjacent units increasing and the temperature difference being equal, ranging from 5°C to 10°C;
m is a positive integer greater than or equal to 6;
the temperature of the (m+1)th unit (formed by the b-section oven) ranges from 70°C to 80°C.

9. The method according to any one of claims 1 to 8, wherein the initial slurry is formed by mixing the negative active material with a conductive agent, a dispersant, a binder, and deionized water.

10. The method according to claim 9, wherein the initial slurry is obtained by:
preparing a dry powder mixture using 95.2 parts of negative active material, 1.6 parts of conductive agent, and 1.4 parts of dispersant; and
adding deionized water into the dry powder mixture as a solvent for continued mixing.
